# FASCICULE DE BREVET EUROPEEN

(11) **EP 0 767 367 B1**
(45) Date de publication et mention de la délivrance du brevet: **02.05.2002**
(21) Numéro de dépôt: 96402065.5
(22) Date de dépôt: 27.09.1996
(51) Int. Cl.: G01M 1/22

(54) **Procédé et dispositif d'équilibrage d'un corps tournant en rotation par addition de masses d'équilibrage**
Verfahren und Vorrichtung zum Auswuchten eines rotierenden Körpers durch Anbringen von Ausgleichsgewichten
Procedure and apparatus for balancing a rotating body by adding balancing masses

(30) Priorité: 04.10.1995 FR 9511652
(43) Date de publication de la demande: 09.04.1997
(73) Titulaire: MULLER BEM, F-28000 Chartres (FR)
(72) Inventeur: Coetsier, Paul, 77400 Pomponne (FR); Douine, Denis, 77400 Lagny sur Marne (FR)
(74) Mandataire: Boutin, Antoine

(56) Documents cités:
- EP-A- 0 383 038
- EP-A- 0 628 798
- US-A- 4 046 017
- PATENT ABSTRACTS OF JAPAN vol. 7, no. 249 (P-234) [1394] , 5 Novembre 1983 & JP-A-58 132641 (KOKUSHAI KEISOTSUKI K.K.), 8 Août 1983,

## Description

L'invention est relative à un procédé d'équilibrage d'un corps tournant en rotation par addition de masses d'équilibrage, ainsi qu'à un dispositif d'équilibrage d'un corps tournant en rotation par addition de masses d'équilibrage.

L'invention est particulièrement utile dans son application aux équilibreuses de roues de véhicules.

Les équilibreuses de roues de véhicules de type connu présentent l'inconvénient, soit d'un équipement rudimentaire nécessitant plusieurs opérations de calcul et des essais successifs, soit au contraire d'un équipement sophistiqué faisant appel à un programme de type arborescent qui indique à l'opérateur une suite d'opérations à exécuter dans un certain ordre et oblige l'opérateur à recommencer la séquence d'opérations lorsque la séquence a été partiellement ou mal exécutée.

Les documents US 4.046.017, EP 0.628.798 et EP 0.383.038 décrivent des équilibreuses de l'art antérieur.

L'invention a pour but de remédier à ces inconvénients, au moyen d'un nouveau procédé d'équilibrage d'un corps tournant en rotation par addition de masses d'équilibrage et d'un dispositif correspondant, grâce auxquels l'équilibreuse se met automatiquement dans une direction radiale prédéterminée facilitant la pose des masses d'équilibrage en utilisant un procédé d'exécution rapide non arborescent et d'une fiabilité améliorée.

A cet effet, l'invention fait appel aux notions de programmation développant les concepts de logique floue.

L'invention a pour objet un procédé d'équilibrage d'un corps tournant en rotation par addition de masses d'équilibrage, comportant les étapes suivantes :
a). lancer le corps tournant en rotation et mesurer les déséquilibres ;
b). calculer les masses d'équilibrage à poser dans chaque plan de pose de masse sur un diamètre prédéterminé correspondant ;
c). arrêter et bloquer le corps tournant en rotation dans une position correspondant à la pose d'une masse dans un premier plan de pose et dans une première direction radiale prédéterminée, choisie par l'opérateur ou par un programme ;
d) déplacer le corps tournant hors de la position atteinte à l'étape c),
e). arrêter et bloquer le corps tournant en rotation dans une position correspondant à la pose d'une masse dans un deuxième plan de pose et dans une deuxième direction radiale prédéterminée, choisie par l'opérateur ou par un programme,

Avantageusement, on déplace le corps tournant manuellement à l'étape d). L'étape c) ou e) est de préférence réalisée automatiquement par un programme suivant une logique floue utilisant un paramètre physique représentatif de l'inertie du corps tournant.

Le paramètre physique représentatif de l'inertie du corps est mesuré de préférence à l'étape b), ou mesuré ou calculé préalablement à l'étape a) du procédé.

Ce programme utilise avantageusement comme déterminants primaires : un paramètre représentatif de l'inertie du corps tournant et l'écart angulaire du corps tournant en rotation par rapport à la direction radiale prédéterminée à atteindre pour la pose de la masse.

Le programme agit en outre sur la vitesse de rotation du corps tournant pour amener cette vitesse de rotation à l'intérieur d'une plage définie au moyen des déterminants primaires.

L'invention a également pour objet un dispositif d'équilibrage d'un corps tournant en rotation par addition de masses d'équilibrage comportant des moyens pour lancer le corps tournant en rotation et mesurer les déséquilibres, des moyens pour mesurer un paramètre physique représentatif de l'inertie du corps tournant et calculer les masses d'équilibrage à poser dans chaque plan de pose de masse sur un diamètre prédéterminé correspondant, ainsi que des moyens pour arrêter et bloquer le corps tournant en rotation dans une position correspondant à la pose d'une masse dans un premier plan de pose et dans une première direction radiale prédéterminée, choisie par l'opérateur ou par un programme, caractérisé en ce que le dispositif est commandé par un programme qui définit en fonction de l'inertie du corps tournant des valeurs minimale et maximale de vitesse de rotation pour des plages d'écarts angulaires et commande les moyens d'entraînement en rotation du corps tournant pour forcer ensuite le corps tournant à tourner entre les vitesses minimale et maximale déterminées ainsi en fonction de l'inertie et de l'écart angulaire instantané, puis commande les moyens pour arrêter et bloquer le corps tournant automatiquement dans la position correspondant à la pose d'une masse dans un plan de pose et dans une direction radiale prédéterminée.

Selon d'autres caractéristiques de l'invention :
- le moyen pour lancer, arrêter et bloquer le corps tournant en rotation comporte un moteur asynchrone à deux sens de rotation associé à un frein électromagnétique, pneumatique, hydraulique ou mécanique ;
- le dispositif comporte un moyen électrique de régulation d'énergie dans les deux sens de rotation ;
- ce moyen électrique agit par coupure d'alimentation en énergie déterminée par un programme suivant une logique floue ;

Le procédé selon l'invention est défini dans la revendication indépendante 1. Le dispositif selon l'invention est défini dans la revendication indépendante 7. Les modes particuliers de réalisation de l'invention sont définis dans les revendications dépendantes 2-6 et 8-10.

L'invention sera mieux comprise grâce à la description qui va suivre donnée à titre d'exemple non limitatif en référence aux dessins annexés dans lesquels :
- la figure 1 représente schématiquement l'agencement d'un dispositif selon l'invention.
- la figure 2 représente schématiquement un principe de fonctionnement du procédé selon l'invention.
- la figure 3 représente schématiquement un diagramme explicatif utilisé pour la mise en oeuvre du procédé selon l'invention.
- la figure 4 représente schématiquement un autre diagramme illustratif utilisé pour la mise en oeuvre du procédé selon l'invention,
- la figure 5 représente schématiquement un organigramme représentatif du procédé selon l'invention.

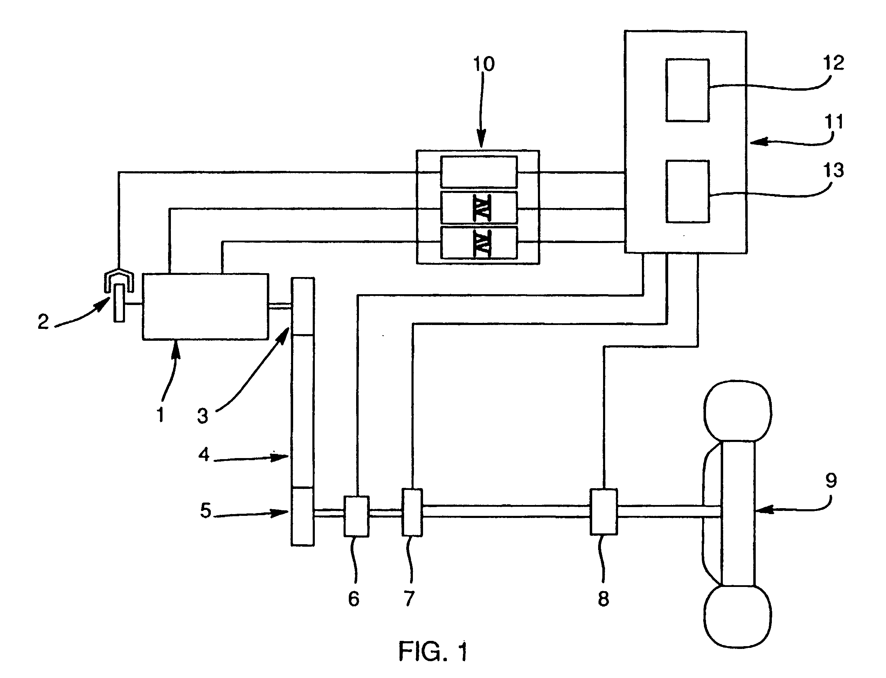

En référence à la figure 1, un dispositif selon l'invention comporte : un moteur électrique 1 d'entraînement associé à un frein 2 électromagnétique et entraînant une poulie 3, une courroie 4 et une autre poulie 5 d'un équipage de mesure entraîné en rotation. L'équipage de mesure entraîné en rotation comporte un codeur rotatif 6 et deux paliers 7 et 8 instrumentés chacun par des capteurs piézo-électriques pour permettre le calcul des balourds et de l'inertie d'un corps tournant 9, par exemple une roue 9 de véhicule.

Le moteur 1 est avantageusement un moteur asynchrone à deux sens de rotation alimenté par l'intermédiaire d'une carte de puissance 10 comprenant des organes de régulation du genre triac, commandés eux-mêmes éventuellement par des opto-triac. Le frein 2 est commandé par la même carte de puissance 10 au moment où on souhaite bloquer la rotation du moteur 1 et par conséquent de l'équipage mobile 5, 6, 7, 8 et 9 en rotation autour de son axe.

Une carte de commande électronique 11 de commande par microprocesseur comporte notamment une horloge 12 et un moyen 13 de détection du passage à zéro de la phase du secteur.

Grâce à la détection du passage par zéro de la phase du secteur, il est possible d'échantillonner le temps en prenant pour origine le passage à zéro de la phase du secteur et pour facteur d'échelle un multiple des impulsions de l'horloge 12. Cet échantillonnage permet un cadencement utilisé pour couper l'alimentation en énergie électrique pendant une partie déterminée de la phase du secteur, afin d'envoyer aux enroulements du moteur asynchrone 1 des impulsions d'énergie d'une valeur de puissance déterminée dans un sens de rotation ou dans le sens opposé.

Ce principe de commande de moteur asynchrone électrique permet ainsi de produire un freinage électrique, lorsque le moteur électrique 1 reçoit des impulsions de puissance électrique tendant à faire tourner le moteur dans le sens inverse de son sens de rotation réel : le freinage électrique ainsi réalisé permet d'augmenter ou de réduire la vitesse de rotation du moteur électrique asynchrone monophasé 1 dans un sens ou dans l'autre, jusqu'à une vitesse de rotation faible, à partir de laquelle le moteur électrique risquerait d'entrer dans un régime d'oscillation autour d'une position radiale déterminée.

Lorsque le moteur électrique 1 se trouve ainsi dans une position de risque d'oscillation faible autour d'un valeur angulaire prédéterminée, on fait alors intervenir le frein 2 qui bloque la rotation du moteur et on coupe l'alimentation électrique de celui-ci pour éviter un échauffement excessif des enroulements du moteur.

Ce principe simple de régulation en vitesse et en position du moteur électrique permet grâce à la transmission par les poulies 3 et 5 reliées par la courroie 4 de réguler la position du corps tournant 9 pour amener celui-ci dans une direction radiale prédéterminée facilitant la pose de masses d'équilibrage par l'opérateur.

Grâce à ce dispositif, il suffit ainsi de :
a) lancer le corps tournant en rotation et mesurer les déséquilibres ;
b) mesurer un paramètre physique représentatif de l'inertie du corps tournant et calculer les masses d'équilibrage à poser dans chaque plan de pose de masses et sur un diamètre prédéterminé correspondant ;
c) arrêter et bloquer le corps tournant en rotation dans une position correspondant à la pose d'une masse dans un premier plan de pose et dans une première direction radiale prédéterminée.

La première direction radiale prédéterminée peut être choisie par l'opérateur : dans le cas de la pose de masses de plomb agrafées sur jantes en acier, cette première direction radiale prédéterminée est avantageusement la position "midi" correspondant au sommet de la jante et à un agrafage par le dessus ; dans le cas de masses collées applicables par pression, la première direction radiale prédéterminée est avantageusement une direction située sensiblement à neuf heures, c'est-à-dire faisant un angle de 90° avec le rayon correspondant à la position midi.

La première direction radiale prédéterminée ou d'autres directions radiales prédéterminées peuvent être choisies automatiquement par le programme en fonction de la nature des masses d'équilibrage à agrafer ou à coller et de la position de l'organe déplaçable servant à poser les masses.

Avantageusement, après avoir posé la première masse d'équilibrage dans le premier plan de pose, le procédé selon l'invention prévoit de déplacer le corps tournant hors de la position atteinte à l'étape précédente, afin d'arrêter et de bloquer le corps tournant en rotation dans une position correspondant à la pose d'une masse dans le deuxième plan de pose et dans une deuxième position radiale prédéterminée identique ou distincte de la première direction radiale prédéterminée précitée.

De préférence, pour être certain de l'intervention de l'opérateur et de la pose de la première masse d'équilibrage, on prévoit que le déplacement du corps tournant hors de la position correspondant à la pose de la première masse d'équilibrage est effectué par une action manuelle de l'opérateur sur l'équipage mobile rotatif portant le corps tournant. Dans le cas d'une roue, l'opérateur tourne simplement la roue d'un certain angle hors de sa position d'immobilisation, ce qui a pour effet de relancer le moteur d'entraînement qui recherche alors sous la commande d'un programme suivant une logique floue la deuxième position correspondant à la pose de la masse dans le deuxième plan de pose et dans ladite deuxième direction radiale prédéterminée précitée.

Comme on l'a indiqué, le procédé d'équilibrage selon l'invention est avantageusement conduit à l'aide d'un programme suivant une logique floue et utilisant comme déterminants primaires de décision : l'inertie du corps tournant déterminée à l'étape b) et l'écart angulaire du corps tournant en rotation par rapport à la direction radiale prédéterminée à atteindre pour la pose de la masse; cet écart angulaire du corps tournant en rotation étant obtenu par différence instantanée de la position angulaire du corps tournant donnée par le codeur rotatif 6 et de la direction radiale prédéterminée en fonction du travail à effectuer.

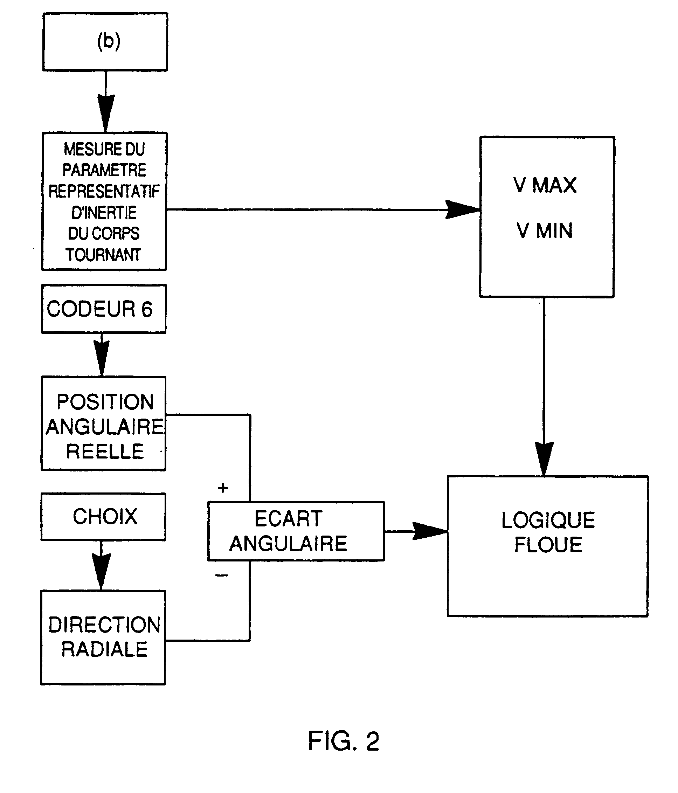

Sur la figure 2, on voit que l'inertie du corps tournant à équilibrer est évaluée grâce à la mesure d'un paramètre représentatif, de préférence pendant le procédé selon l'invention, que la position angulaire réelle du corps tournant est donnée de manière pratiquement instantanée par le codeur rotatif 6 ; que la direction radiale prédéterminée résulte d'un choix de l'opérateur ou d'un programme de décision prenant en compte le type de travail à effectuer : masses à poser par agrafage ou masses à poser par collage, ou éventuellement autre type de travail.

A partir de ces paramètres, le programme définit en fonction de l'inertie du corps tournant des valeurs minimales et maximales de vitesse de rotation pour des plages d'écarts angulaires. Le programme force ensuite le moteur asynchrone à tourner entre les vitesses minimales et maximales déterminées ainsi en fonction de l'inertie et de l'écart angulaire instantané en agissant sur l'alimentation en énergie délivrée par la carte d'alimentation 10 (figure 1).

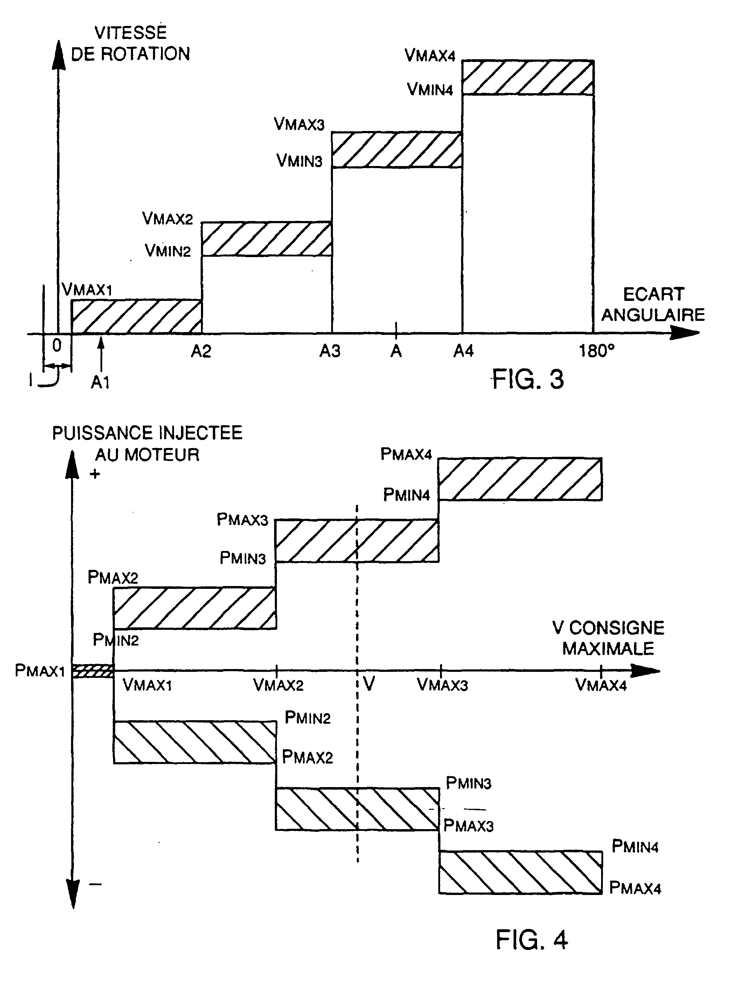

Sur la figure 3, on a représenté sur un diagramme l'influence du programme sur la vitesse de rotation de l'équipage mobile 6, 7, 8 et 9 pour une inertie d'équipage mobile connue définissant des valeurs : Vmax1, Vmin2, Vmax2, Vmin3, Vmax3, Vmin4, Vmax4. Bien entendu, ces valeurs peuvent évoluer continûment ou par paliers en fonction des plages d'inertie des corps tournants à équilibrer.

Le fonctionnement du programme est le suivant : pour un écart angulaire donné A, on doit se trouver dans les aires hachurées. Par conséquent, si la vitesse de rotation est supérieure par exemple pour un écart angulaire instantané A compris entre A₃ et A₄ à la vitesse maximale Vmax3, on freine le moteur 1 en lui injectant une puissance "négative" tendant à faire tourner le moteur en sens inverse jusqu'à se trouver dans l'aire hachurée. Réciproquement, si cette vitesse est inférieure à la vitesse minimale Vmin3, on injecte la puissance électrique supplémentaire pour augmenter cette vitesse de rotation jusqu'à ce qu'elle se trouve dans l'aire hachurée.

Au fur et à mesure que l'on se rapproche de la cible, c'est-à-dire le zéro correspondant à la direction radiale prédéterminée recherchée, les vitesses maximale et minimale diminuent, ce qui contribue au ralentissement de l'équipage mobile. En dessous d'un certain écart angulaire A2, la vitesse minimale est faible ou voisine de zéro et la vitesse maximale est limitée à un seuil Vmax1. Lorsque l'équipage mobile atteint l'écart angulaire A1, le frein électromagnétique 2 ou tout autre frein équivalent (pneumatique, hydraulique ou mécanique) freine le moteur 1 de manière mesurée pour le ralentir notablement. L'équipage mobile 6, 7, 8 et 9 continue alors sur son erre et atteint le voisinage du zéro dans une plage I d'incertitude tolérée. Dès que l'écart angulaire est intérieur à la plage I, le frein 2 agit définitivement pour arrêter et bloquer le moteur 1, les poulies 3 et 5 et l'équipage mobile 6, 7, 8 et 9 en rotation jusqu'à ce que la masse d'équilibrage ait été posée par l'opérateur et que celui-ci ait relancé la machine de préférence manuellement.

L'invention est particulièrement avantageuse, en ce qu'elle permet l'utilisation d'un moteur électrique monophasé asynchrone de type connu et d'usage courant dans les dispositifs d'équilibrage, notamment les équilibreuses de roues de véhicules et en ce que la logique floue utilisée pour la commande du dispositif permet d'obtenir très rapidement et de manière sûre l'arrêt du corps tournant dans les positions radiales prédéterminées souhaitées.

Après avoir posé la masse d'équilibrage et relancé manuellement la roue, le programme effectue un cycle analogue pour le deuxième plan de pose et la deuxième direction radiale prédéterminée en utilisant le même procédé que celui exposé en référence à la figure 3.

Sur la figure 4, on a représenté un diagramme représentatif du mode de programmation de la puissance injectée au moteur en fonction de la valeur de la vitesse instantanée du moteur fournie par le codeur optique ou autre codeur angulaire équivalent. Ainsi, à titre d'exemple, si la vitesse instantanée V du moteur se trouve entre les vitesses Vmax2 et Vmax3, la puissance injectée au moteur sera autorisée dans une aire comprise entre une puissance minimale Pmin3 et une puissance maximale Pmax3. On désignera par puissance positive une puissance injectée au moteur qui tend à faire tourner le moteur dans le sens de rotation réel à cet instant et par puissance négative une puissance électrique injectée au moteur qui tend à faire tourner le moteur en sens contraire de son sens de rotation réelle à cet instant, c'est-à-dire à réaliser un freinage électrique du moteur.

La commande de puissance est réalisée facilement en détectant l'instant de passage à zéro de la phase du secteur et en déclenchant la conduction des triacs à un instant déterminé par rapport à cet instant de passage par zéro de la phase du secteur pour obtenir les puissances électriques positives ou négatives désirées.

Le principe de fonctionnement et de déclenchement de la conduction des triacs pour produire une puissance électrique positive ou une puissance électrique négative est bien connu et ne nécessite pas de description détaillée. Il convient seulement de préciser que la puissance maximale Pmax1 pour une vitesse très faible est très inférieure à la puissance de blocage du frein associé au moteur électrique et n'est pas susceptible d'échauffer de manière importante les enroulements du moteur électrique asynchrone monophasé utilisé de préférence dans la présente invention. De préférence, on immobilise le moteur avant de couper son alimentation électrique.

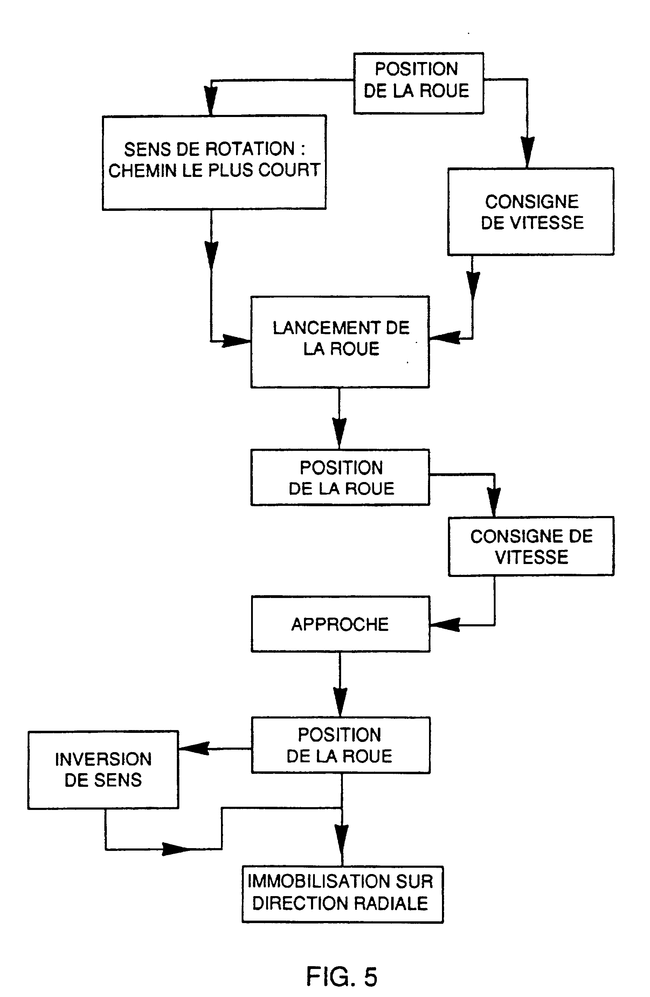

En référence à la figure 5, un organigramme schématique du fonctionnement de l'invention comporte les étapes suivantes :
a) connaissant la position instantanée de la roue, on détermine immédiatement le sens de rotation de la roue de manière à utiliser le chemin le plus court pour arriver au blocage à la direction radiale prédéterminée souhaitée et on choisit une consigne de vitesse comme décrit en référence à la figure 3,
b) on lance la roue avec une puissance positive ou négative par rapport à un sens de rotation prédéterminé choisi selon que la position de la roue est distante ou non de plus de 180° de la position radiale prédéterminée visée,
c) on continue à faire tourner la roue en réduisant par paliers la consigne de vitesse en fonction de la position instantanée de la roue, comme décrit en référence à la figure 3 pour atteindre la phase d'approche, c'est-à-dire l'écart angulaire A₁ de la figure 3 ou on réalise un freinage de ralentissement et on laisse continuer la roue à tourner sur son erre,
d) on surveille continûment la position de la roue et on l'immobilise sur la direction radiale visée à l'aide du frein ou,
e) dans le cas où l'immobilisation n'a pas été assez rapide, on délivre une impulsion d'inversion de sens de la position de la roue pour tourner légèrement en arrière et immobiliser la roue sur la direction radiale visée à l'aide du frein.

Selon une variante avantageuse, on utilise pour déterminer les vitesses minimales Vmin et les vitesses maximales Vmax en fonction du paramètre représentatif de l'inertie du corps tournant, non seulement un paramètre représentatif de l'inertie du corps tournant proprement dite, mais également la dispersion des valeurs c'est-à-dire un paramètre représentatif du balourd propre au corps tournant lorsque ce balourd est très important et empêche la roue de tourner régulièrement.

L'invention décrite en référence à des variantes de réalisation particulières n'y est nullement limitée et couvre au contraire toute modification de forme et toute variante de réalisation : ainsi, le frein actionné électriquement monté sur l'arbre moteur peut être intégré au moteur (moteur-frein disponible dans le commerce) ou être indépendant du moteur. En variante, le frein peut être monté sur un emplacement quelconque de la transmission de mouvement et peut être pneumatique, hydraulique ou constitué par un électro-aimant déclenchant un frein à disque.

## Revendications

1. Procédé d'équilibrage d'un corps tournant (9) en rotation par addition de masses d'équilibrage, comportant les étapes suivantes :
a). lancer le corps tournant (9) en rotation et mesurer les déséquilibres ;
b). calculer les masses d'équilibrage à poser dans chaque plan de pose de masse sur un diamètre prédéterminé correspondant ;
c). arrêter et bloquer le corps tournant (9) en rotation dans une position correspondant à la pose d'une masse dans un premier plan de pose et dans une première direction radiale prédéterminée, choisie par l'opérateur ou par un programme ;
d) déplacer le corps tournant (9) hors de la position atteinte à l'étape c),
e). arrêter et bloquer le corps tournant (9) en rotation dans une position correspondant à la pose d'une masse dans un deuxième plan de pose et dans une deuxième direction radiale prédéterminée, choisie par l'opérateur ou par un programme,
**caractérisé en ce que** l'étape c) ou l'étape e) est réalisée automatiquement par un programme qui définit en fonction de l'inertie du corps tournant des valeurs minimale et maximale de vitesse de rotation pour des plages d'écarts angulaires et force ensuite le corps tournant (9) à tourner entre les vitesses minimale et maximale déterminées ainsi en fonction de l'inertie et de l'écart angulaire instantané.

2. Procédé selon la revendication 1, **caractérisé en ce qu'**on mesure à l'étape b) un paramètre physique variable en fonction de l'inertie du corps tournant (9).

3. Procédé selon la revendication 2, **caractérisé en ce qu'**on déplace le corps tournant (9) manuellement à l'étape d).

4. Procédé selon l'une quelconque des revendications précédentes, **caractérisé en ce que** l'étape c) ou e) est réalisée automatiquement par un programme suivant une logique floue.

5. Procédé selon la revendication 4, **caractérisé en ce que** le programme utilise comme déterminants primaires : un paramètre représentatif de l'inertie du corps tournant (9) et l'écart angulaire (A) du corps tournant (9) en rotation par rapport à la direction radiale prédéterminée à atteindre pour la pose de la masse.

6. Procédé selon la revendication 4 ou la revendication 5, **caractérisé en ce que** le programme agit sur la vitesse (V) de rotation du corps tournant (9) pour amener cette vitesse (V) de rotation à l'intérieur d'une plage définie au moyen des déterminants primaires.

7. Dispositif d'équilibrage d'un corps tournant en rotation par addition de masses d'équilibrage comportant des moyens (1-8, 10-13) pour lancer le corps tournant (9) en rotation et mesurer les déséquilibres, des moyens pour mesurer un paramètre physique représentatif de l'inertie du corps tournant (9) et calculer les masses d'équilibrage à poser dans chaque plan de pose de masse sur un diamètre prédéterminé correspondant, ainsi que des moyens pour arrêter et bloquer le corps tournant (9) en rotation dans une position correspondant à la pose d'une masse dans un premier plan de pose et dans une première direction radiale prédéterminée, choisie par l'opérateur ou par un programme, **caractérisé en ce que** le dispositif est commandé par un programme qui définit en fonction de l'inertie du corps tournant des valeurs minimale et maximale de vitesse de rotation pour des plages d'écarts angulaires et commande les moyens (1-8) d'entraînement en rotation du corps tournant (9) pour forcer ensuite le corps tournant (9) à tourner entre les vitesses minimale et maximale déterminées ainsi en fonction de l'inertie et de l'écart angulaire instantané, puis commande les moyens (10-13) pour arrêter et bloquer (2) le corps tournant (9) automatiquement dans la position correspondant à la pose d'une masse dans un plan de pose et dans une direction radiale prédéterminée.

8. Dispositif selon la revendication 7, **caractérisé en ce que** le moyen (1-8, 10-13) pour lancer, arrêter et bloquer le corps tournant (9) en rotation comporte un moteur asynchrone (1) à deux sens de rotation associé à un frein (2) électromagnétique, pneumatique, hydraulique ou mécanique.

9. Dispositif selon la revendication 7 ou la revendication 8, **caractérisé en ce que** le dispositif comporte un moyen (10-13) électrique de régulation d'énergie dans les deux sens de rotation.

10. Dispositif selon la revendication 9, **caractérisé en ce que** le moyen électrique (10-13) agit par coupure d'alimentation en énergie déterminée par un programme suivant une logique floue.

## Claims

1. Method of balancing a rotating body (9) by the addition of balancing masses, comprising the following steps:
a) starting the rotating body (9) and measuring the imbalances;
b) calculating the balancing masses to be placed in each mass-placement plane on a corresponding predetermined diameter;
c) stopping and locking the rotating body (9) in a position corresponding to the placing of a mass in a first placement plane and in a first predetermined radial direction chosen by the operator or by a program;
d) moving the rotating body (9) out of the: position reached in step c) ;
e) stopping and locking the rotating body (9) in a position corresponding to the placing of a mass in a second placement plane, and in a second predetermined radial direction chosen by the operator or by a program,
**characterized in that** step c) or step e) is carried out automatically by a program which defines, according to the inertia of the rotating body, minimum and maximum rotation speed values for angular deviation ranges and then forces the rotating body (9) to rotate between the minimum and maximum speeds thus determined according to the inertia and the instantaneous angular deviation.

2. Method according to Claim 1, **characterized in that** a physical parameter which varies according to the inertia of the rotating body (9) is measured in step b).

3. Method according to Claim 2, **characterized in that** the rotating body (9) is moved to step d) manually.

4. Method according to any one of the preceding claims, **characterized in that** step c) or e) is carried out automatically by a program using fuzzy logic.

5. Method according to Claim 4, **characterized in that** the program uses as primary determinants: a parameter representative of the inertia of the rotating body (9) and the angular deviation (A) of the rotating body (9) with respect to the predetermined radial direction to be reached for placing the mass.

6. Method according to Claim 4 or Claim 5, **characterized in that** the program acts on the rotation speed (V) of the rotating body (9) in order to bring this rotation speed (V) within a range defined by means of the primary determinants.

7. Apparatus for balancing a rotating body by the addition of balancing masses, comprising means (1-8, 10-13) for starting the rotating body (9) and measuring the imbalances, means for measuring a physical parameter representative of the inertia of the rotating body (9) and for calculating the balancing masses to be placed in each mass placement plane on a corresponding predetermined diameter, as well as means for stopping and locking the rotating body (9) in a position corresponding to the placing of a mass in a first placement plane and in a first predetermined radial direction chosen by the operator or by a program, **characterized in that** the apparatus is controlled by a program which defines, according to the inertia of the rotating body, minimum and maximum rotation speeds for angular deviation ranges and actuates the means (1-8) for rotating the rotating body (9) in order thereafter to force the rotating body (9) to rotate between the minimum and maximum speeds thus defined according to the inertia and to the instantaneous angular deviation, and then actuates the means (10-13) for automatically stopping and locking (2) the rotating body (9) in the position corresponding to the placing of a mass in a placement plane and in a predetermined radial direction.

8. Apparatus according to Claim 7, **characterized in that** the means (1-8, 10-13) for starting, stopping and locking the rotating body (9) comprise an asynchronous motor (1) having two directions of rotation, combined with an electromagnetic, pneumatic, hydraulic or mechanical brake (2).

9. Apparatus according to Claim 7 or Claim 8, **characterized in that** the apparatus includes an electrical means (10-13) for regulating the energy in the two directions of rotation.

10. Apparatus according to Claim 9, **characterized in that** the electrical means (10-13) acts by cutting off the power supply determined by a program using fuzzy logic.

## Patentansprüche

1. Verfahren zum Auswuchten eines rotierenden Körpers (9) durch Anbringen von Ausgleichsmassen, mit den folgenden Verfahrensschritten:
a) Anwerfen des rotierenden Körpers (9) und Messen der Unwuchten,
b) Berechnen der Ausgleichsmassen, die in jeder Massenanbringungsebene auf einem entsprechenden vorbestimmten Durchmesser anzubringen sind,
c) Anhalten und Blockieren des rotierenden Körpers (9) in einer Position, die dem Anbringen einer Masse in einer ersten Anbringungsebene und einer ersten vorbestimmten radialen Richtung entspricht, die von der Bedienungsperson oder von einem Programm ausgewählt wird,
d) Herausbewegen des rotierenden Körpers (9) aus der in dem Verfahrensschritt c) erreichten Position,
e) Anhalten und Blockieren des rotierenden Körpers (9) in einer Position, die dem Anbringen einer Masse in einer zweiten Anbringungsebene und einer zweiten vorbestimmten radialen Richtung entspricht, die von der Bedienungsperson oder von einem Programm ausgewählt wird,
**dadurch gekennzeichnet,**
**daß** der Verfahrensschritt c) oder der Verfahrensschritt e) automatisch durch ein Programm realisiert wird, das in Abhängigkeit von der Trägheit des rotierenden Körpers minimale und maximale Werte der Drehgeschwindigkeit für Bereiche von Winkelabweichungen festlegt und anschließend den rotierenden Körper (9) zwingt, zwischen der minimalen und maximalen Geschwindigkeit zu rotieren, die in dieser Weise in Abhängigkeit von der Trägheit und der momentanen Winkelabweichung festgelegt wurden.

2. Verfahren nach Anspruch 1, **dadurch gekennzeichnet, daß** in dem Verfahrensschritt b) ein physikalischer Parameter gemessen wird, der sich in Abhängigkeit von der Trägheit des rotierenden Körpers (9) ändert.

3. Verfahren nach Anspruch 2, **dadurch gekennzeichnet, daß** der rotierende Körper (9) in dem Verfahrensschritt d) manuell bewegt wird.

4. Verfahren nach einem der vorhergehenden Ansprüche, **dadurch gekennzeichnet, daß** der Verfahrensschritt (c) oder der Verfahrensschritt e) automatisch durch ein Programm nach einer Fuzzy-Logik realisiert wird.

5. Verfahren nach Anspruch 4, **dadurch gekennzeichnet, daß** das Programm als primäre Determinanten benutzt: Einen Parameter, der für die Trägheit des rotierenden Körpers (9) repräsentativ ist, sowie die Winkelabweichung (A) des rotierenden Körpers (9) relativ zu der vorbestimmten, radialen Richtung, die für das Anbringen der Masse zu erreichen ist.

6. Verfahren nach Anspruch 4 oder 5, **dadurch gekennzeichnet, daß** das Programm auf die Drehgeschwindigkeit (V) des rotierenden Körpers (9) einwirkt, um diese Drehgeschwindigkeit (V) in einen mit Hilfe der primären Determinanten definierten Bereich zu führen.

7. Vorrichtung zum Auswuchten eines rotierenden Körpers durch Anbringen von Ausgleichsmassen
mit Mitteln (1-8, 10-13) zum Anwerfen des rotierenden Körpers (9) und zum Messen der Unwuchten,
mit Mitteln zum Berechnen der Ausgleichsmassen, die in jeder Massenanbringungsebene auf einem entsprechenden vorbestimmten Durchmesser anzubringen sind,
sowie mit Mitteln zum Anhalten und Blockieren des rotierenden Körpers (9) in einer Position, die dem Anbringen einer Masse in einer ersten Anbringungsebene und in einer ersten vorbestimmten radialen Richtung entspricht, die von der Bedienungsperson oder von einem Programm ausgewählt wird,
**dadurch gekennzeichnet,**
**daß** die Vorrichtung von einem Programm gesteuert wird, das in Abhängigkeit von der Trägheit des rotierenden Körpers minimale und maximale Werte les Drehgeschwindigkeit für Bereiche von Winkelabweichungen festlegt und die Mittel (1-8) für den Drehantrieb des rotierenden Körpers (9) steuert, um anschließend den rotierenden Körper (9) zu zwingen, zwischen der minimalen und maximalen Geschwindigkeit zu rotieren, die in dieser Weise in Abhängigkeit von der Trägheit und der momentanen Winkelabweichung festgelegt wurden, und dann die Mittel (10-13) so steuert, daß sie den rotierenden Körper (9) automatisch in der Position anhalten und blockier, die dem Anbringen einer Masse in einer Anbringungsebene und in einer vorbestimmten radialen Richtung entspricht.

8. Vorrichtung nach Anspruch 7, **dadurch gekennzeichnet, daß** das Mittel (1-8, 10-13) zum Anhalten und Blockieren des rotierenden Körpers (9) einen Synchronmotor (1) mit zwei Drehrichtungen umfaßt, der mit einer elektromagnetischen, pneumatischen, hydraulischen oder mechanischen Bremse (2) verbunden ist.

9. Vorrichtung nach Anspruch 7 oder 8, gekennzeichnet, daß die Vorrichtung ein elektrisches Mittel (10-13) zur Energieregelung in den beiden Drehrichtungen aufweist.

10. Vorrichtung nach Anspruch 9, gekennzeichnet, daß das elektrische Mittel (10-13) durch Unterbrechung der Energiezufuhr wirkt, die durch ein Programm nach einer Fuzzy-Logik bestimmt wird.
